# FASCICULE DE BREVET EUROPEEN

(11) **EP 3 643 089 B1**
(45) Date de publication et mention de la délivrance du brevet: **28.09.2022**
(21) Numéro de dépôt: 18749415.8
(22) Date de dépôt: 07.06.2018
(51) Int. Cl.: H04W 12/108, H04W 12/069, H04W 12/0431, H04L 9/40, H04L 9/32, H04W 4/38, H04W 4/70

(54) **PROCÉDÉS D'IDENTIFICATION OPERATEUR DE TRAMES À ÉMETTRE, ET DE VÉRIFICATION D'APPARTENANCE OPÉRATEUR, UN DISPOSITIF DE COMMUNICATION ET UNE PASSERELLE DE COMMUNICATION**
VERFAHREN ZUR IDENTIFIZIERUNG DES BEDIENERS VON ÜBERTRAGENEN RAHMEN UND ZUR ÜBERPRÜFUNG DER MITGLIEDSCHAFT DES BEDIENERS, KOMMUNIKATIONSVORRICHTUNG UND KOMMUNIKATIONSGATEWAY
METHODS FOR OPERATOR IDENTIFICATION OF TRANSMITTED FRAMES AND FOR CHECKING OPERATOR MEMBERSHIP, COMMUNICATION DEVICE AND COMMUNICATION GATEWAY

(30) Priorité: 19.06.2017 FR 1755570
(43) Date de publication de la demande: 29.04.2020
(73) Titulaire: Orange, 92130 Issy-les-Moulineaux (FR)
(72) Inventeur: BENDIABDALLAH, Halim, 92326 Châtillon Cedex (FR); SOUMOY, Isabelle, 92326 Châtillon Cedex (FR)
(86) Numéro de dépôt international: PCT/FR2018/000166
(87) Numéro de publication internationale: WO 2018/234641

(56) Documents cités:
- CN-A- 104 967 517
- SRIDHAR S ET AL: "Intelligent security framework for iot devices cryptography based end-to-end security architecture", 2017 INTERNATIONAL CONFERENCE ON INVENTIVE SYSTEMS AND CONTROL (ICISC), IEEE, 19 janvier 2017 (2017-01-19), pages 1-5, XP033165880, DOI: 10.1109/ICISC.2017.8068718
- SANKARAN SRIRAM: "Lightweight security framework for IoTs using identity based cryptography", 2016 INTERNATIONAL CONFERENCE ON ADVANCES IN COMPUTING, COMMUNICATIONS AND INFORMATICS (ICACCI), IEEE, 21 septembre 2016 (2016-09-21), pages 880-886, XP032989898, DOI: 10.1109/ICACCI.2016.7732156
- MOHAMED HAMDY ELDEFRAWY ET AL: "A key agreement algorithm with rekeying for wireless sensor networks using public key cryptography", ANTI-COUNTERFEITING SECURITY AND IDENTIFICATION IN COMMUNICATION (ASID), 2010 INTERNATIONAL CONFERENCE ON, IEEE, PISCATAWAY, NJ, USA, 18 juillet 2010 (2010-07-18), pages 1-6, XP031734358, ISBN: 978-1-4244-6731-0

## Description

L'invention concerne un procédé d'identification opérateur de trames à émettre, un procédé de vérification d'appartenance opérateur, un dispositif de communication et une passerelle de communication. En particulier, l'invention concerne une indentification et une vérification d'appartenance opérateur de trames dans le contexte de transmission sur des réseaux de communication sans fil basse consommation tels que LoRa (marque déposée), SigFox (marque déposée), etc.

Le domaine des objets connectés est en pleine expansion. De multiples objets connectés investissent notre quotidien : nos maisons (domotique : thermostat, ouverture, etc., surveillance : station météo, détecteur, etc.), notre personne (montre, pèse-personne, etc.), notre environnement... Les opérateurs de réseaux de télécommunication proposent un réseau de communication dédié à ces objets connectés : un réseau de communication sans-fil basse consommation en raison des capacités limitées des objets connectés. Parmi les réseaux de communication sans-fil basse consommation existants sont proposés les réseaux SigFox (marque déposée), LoRaWan (marque déposée), etc. via lesquels les informations sont réceptionnées en provenance des objets connectés pour être ensuite véhiculées à travers le réseau Internet.

Pour cela, des antennes capables de démoduler le signal du réseau sans-fil, notamment le signal radio LoRa, en un signal conforme à un protocole du réseau Internet, tel que le protocole TCP/IP, sont installées. Ces antennes sont couplées à une passerelle, aussi nommée Gateway en anglais, qui décode les trames reçues via le réseau de communication sans fil basse consommation pour les envoyer vers un serveur réseau, ou Network Server en anglais, selon un protocole Internet tel que TCP ou UDP. Le serveur réseau est capable de déterminer, voire de vérifier, parmi les trames reçues celles provenant d'objets connectés associés à l'infrastructure opérateur du serveur réseau. Pour déterminer et valider éventuellement les trames reçues, le serveur réseau s'appuie sur des clés stockées dans sa base de données, si les clés ne correspondent pas, le message contenu dans la trame est ignoré. Ainsi, le serveur réseau ne traitera pas les trames émises par des objets connectés qui ne lui sont pas associés. Cela permet de réduire la charge de traitement du serveur réseau.

Eventuellement, les trames transmises par les objets connectés sont aussi cryptées par une clé de passerelle afin de sécuriser les trames entre les objets connectés et la passerelle comme le décrit le document « Intelligent security framework for iot devices cryptography based end-to-end security architecture » de Shridhar S et al, 2017 International conference on inventive systems and control (ICISC), IEEE, 19 janvier 2017, p1-5.

Néanmoins, la transmission systématique à un serveur réseau de toutes les trames reçues par une passerelle associé à ce serveur réseau d'objet(s) connecté(s) présent(s) dans la zone de couverture de la passerelle engendre une surcharge du trafic réseau et de la sollicitation du serveur réseau.

Un des buts de la présente invention est de remédier à des inconvénients de l'état de la technique.

Un objet de l'invention est un procédé d'identification opérateur de trames à émettre par un dispositif de communication d'une infrastructure opérateur via un premier réseau de communication. Le procédé d'identification opérateur comporte un premier chiffrement, dit chiffrement passerelle, par le dispositif de communication de l'infrastructure opérateur, d'une trame destinée à un serveur réseau avec une clé publique passerelle associée au dispositif de communication dans l'infrastructure opérateur, la clé publique passerelle étant appairée à une clé privée passerelle stockée dans au moins une passerelle de l'infrastructure opérateur, la clé publique passerelle associée au dispositif de communication ayant été générée lors du rattachement du dispositif de communication à l'infrastructure opérateur.

Ainsi, la charge du deuxième réseau de communication entre la passerelle et le serveur réseau pourra être réduite ainsi que la charge de traitement du serveur réseau.

En particulier, le procédé d'identification opérateur comporte une génération d'un condensat de la trame destinée au serveur réseau en fonction d'une clé d'intégrité, le condensat et la clé d'intégrité étant ajoutés dans la trame destinée au serveur réseau préalablement au chiffrement passerelle.

Ainsi, non seulement la charge sera limitée aux trames appartenant à l'infrastructure opérateur du serveur réseau auquel elles sont destinées mais aussi uniquement aux trames valides, c'est-à-dire n'ayant pas subi de modification en raison de la transmission.

Un objet de l'invention est également un procédé de transmission de trames par un dispositif de communication d'une infrastructure opérateur via un premier réseau de communication. Le procédé transmission de trames comporte un premier chiffrement, dit chiffrement passerelle, par le dispositif de communication de l'infrastructure opérateur, d'une trame destinée à un serveur réseau avec une clé publique passerelle associée au dispositif de communication dans l'infrastructure opérateur, la clé publique passerelle étant appairée à une clé privée passerelle stockée dans au moins une passerelle de l'infrastructure opérateur, la clé publique passerelle associée au dispositif de communication ayant été générée lors du rattachement du dispositif de communication à l'infrastructure opérateur.

En particulier, le procédé de transmission comporte, préalablement au premier chiffrement, un deuxième chiffrement, dit chiffrement serveur, d'une trame destinée à un serveur réseau avec une clé privée serveur, la clé privée serveur étant appairée à une clé publique serveur stockée dans un serveur réseau de l'infrastructure opérateur.

Ainsi, les données de la trame restent bien sécurisées car elles ne sont accessibles que lorsque la trame a été reçue par le serveur réseau. En effet, les passerelles étant plus faibles en termes de sécurité que les serveurs, le déport de clés serveurs dans les passerelles augmenterait les risques en terme de sécurité des trames. En outre, cela évite la surcharge des passerelles liées à une distribution des clés serveurs dans les passerelles pour que la passerelle filtre les trames en fonction de leur appartenance au lieu du serveur réseau en raison du grand nombre de clés serveurs.

Un objet de l'invention est aussi un procédé de vérification d'appartenance à une infrastructure opérateur d'un serveur destinataire de trames reçues par une passerelle de l'infrastructure opérateur en provenance d'un dispositif de communication. Le procédé de vérification comporte un premier déchiffrement des trames reçues au moyen d'une clé privée passerelle stockée dans la passerelle, dit déchiffrement passerelle, la clé privée passerelle ayant été générée lors du rattachement du dispositif de communication à une infrastructure opérateur, une réussite du déchiffrement passerelle d'une trame indiquant que la trame déchiffrée appartient à l'infrastructure opérateur.

En particulier, le procédé de vérification comporte une comparaison d'un condensat contenu dans la trame déchiffrée avec un condensat d'une partie utile de trame déchiffré générée au moyen d'un clé d'intégrité contenu dans la trame déchiffré, un résultat d'égalité de la comparaison indiquant la réussite du déchiffrement passerelle de la trame.

Un objet de l'invention est encore un procédé de filtrage de trames reçues par une passerelle d'une infrastructure réseau en provenance d'un dispositif de communication. Le procédé de filtrage comporte une transmission à un serveur réseau de l'infrastructure réseau d'au moins une trame reçue d'un dispositif de communication via un premier réseau de communication déchiffrée au moyen d'une clé privée passerelle stockée dans la passerelle si le déchiffrement passerelle de la trame est réussi. , la clé privée passerelle ayant été générée lors du rattachement du dispositif de communication à une infrastructure opérateur

En particulier, le procédé de filtrage comporte un blocage d'au moins une trame reçue déchiffrée si le déchiffrement passerelle de la trame est un échec.

Ainsi, la passerelle n'est pas surchargée par un traitement pour déterminer le destinataire de la trame reçue.

Un objet de l'invention est, en outre, un procédé de génération de clés passerelle asymétriques mis en œuvre lors du rattachement d'un dispositif de communication à une infrastructure opérateur. Le procédé de génération de clés passerelle comporte une fourniture de la paire de clés passerelle générée en transmettant au dispositif de communication la clé publique passerelle de la paire générée et à au moins une passerelle de l'infrastructure opérateur la clé privée passerelle de la paire générée.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'une infrastructure opérateur, respectivement un dispositif de communication, tel qu'un objet connecté, une passerelle, un serveur réseau et étant conçus pour commander l'exécution des différentes étapes de ce procédé.

L'invention vise donc aussi un programme comprenant des instructions de code de programme pour l'exécution des étapes du procédé d'identification opérateur, et/ou du procédé de transmission ou du procédé de vérification d'appartenance, et/ou du procédé de filtrage, ou du procédé de génération de clés selon la revendication précédente lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est un dispositif de communication d'une infrastructure opérateur apte à transmettre des trames via un premier réseau de communication. Le dispositif de communication comporte un premier chiffreur, dit chiffreur passerelle, le chiffreur passerelle étant apte à chiffrer au moins un trame destinée à un serveur de l'infrastructure opérateur avec une clé publique passerelle associée au dispositif de communication dans l'infrastructure opérateur, la clé publique passerelle étant appairée à une clé privée passerelle stockée dans au moins une passerelle de l'infrastructure opérateur, la clé publique passerelle associée au dispositif de communication ayant été générée lors du rattachement du dispositif de communication à l'infrastructure opérateur.

En particulier, le premier réseau de communication est un réseau de communication sans fil basse consommation.

Un objet de l'invention est aussi une passerelle d'une infrastructure opérateur apte à transmettre des trames reçues d'un dispositif de communication via un premier réseau de communication à un serveur réseau de l'infrastructure opérateur via un deuxième réseau de communication. La passerelle comporte un filtre de trames apte à transmettre une trame reçue déchiffrée au moyen d'une clé privée passerelle stockée dans la passerelle si le déchiffrement passerelle de la trame est réussi, la clé privée passerelle ayant été générée lors du rattachement du dispositif de communication à une infrastructure opérateur.

Un objet de l'invention est également un serveur réseau d'une infrastructure opérateur aptes à recevoir des trames émises par un dispositif de communication via un premier réseau de communication et relayées par une passerelle via un deuxième réseau de communication. Le serveur réseau comporte :
un analyseur de trames reçues, l'analyseur étant alimentés par toutes les trames provenant de la passerelle, la passerelle ayant transmis au serveur réseau une trame reçue d'un dispositif de communication si le déchiffrement passerelle, au moyen d'une clé privée passerelle stockée dans la passerelle, de la trame reçue du dispositif de communication est réussi ; et
un générateur de paires de clés passerelle fournissant une clé publique passerelle à un dispositif de communication et une clé privée passerelle à au moins une passerelle de l'infrastructure opérateur lors du rattachement du dispositif de communication à une infrastructure opérateur comportant le serveur réseau

Les caractéristiques et avantages de l'invention apparaîtront plus clairement à la lecture de la description, faite à titre d'exemple, et des figures s'y rapportant qui représentent :
- Figures 1a et 1b, des schémas simplifiés d'architecture de communication comportant une passerelle entre un premier réseau de communication et un deuxième réseau de communication, respectivement dans laquelle la validation des trames est effectuée dans le serveur réseau selon l'art antérieur, et dans laquelle la passerelle filtre les trames en fonction de leur appartenance à l'infrastructure opérateur du serveur réseau destinataire selon l'invention ;
- Figures 2a et 2b, des schémas simplifiés relatifs à la distribution des clés passerelles selon l'invention, respectivement un schéma simplifié d'une mise en œuvre de la distribution des clés passerelle selon l'invention, et un schéma simplifié des échanges et des procédés mis en œuvre dans l'architecture de communication lors de la distribution des clés passerelle ;
- Figure 3, un schéma simplifié des échanges et procédés mis en œuvre dans l'architecture de communication lors de l'envoi de trames d'un dispositif de communication vers un serveur réseau, selon l'invention ;
- Figure 4, un schéma simplifié des échanges et procédés mis en œuvre dans l'architecture de communication lors du filtrage des trames par la passerelle, selon l'invention ;
- Figures 5a et 5b, un schéma simplifié des procédés mis en œuvre respectivement par le dispositif de communication et par la passerelle selon l'invention ;
- Figure 6 un schéma simplifié d'une architecture de communication selon l'invention.

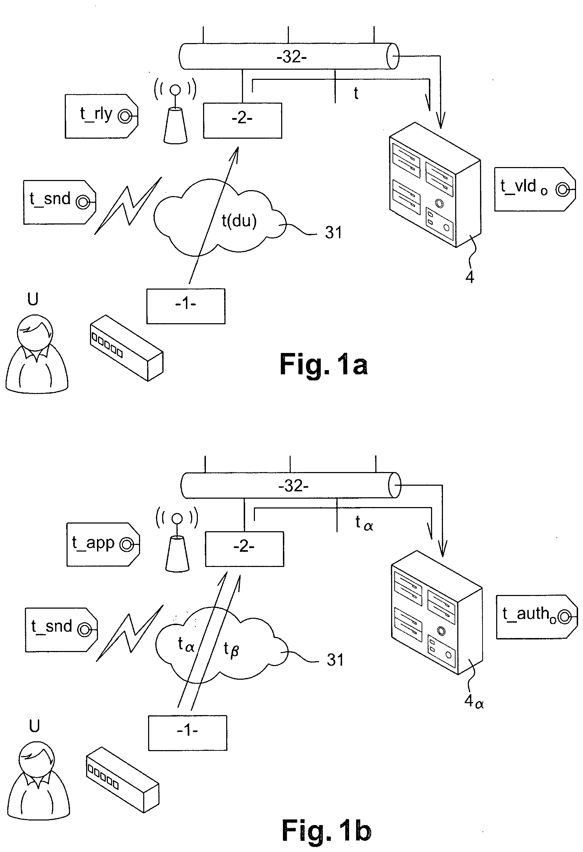

Les figures 1a et 1b illustrent des schémas simplifiés d'architecture de communication comportant une passerelle entre un premier réseau de communication et un deuxième réseau de communication.

La figure 1a illustre une architecture de communication dans laquelle la validation des trames est effectuée dans le serveur réseau selon l'art antérieur. L'architecture de communication comporte un premier réseau de communication 31, notamment un réseau de communication sans fil, et un deuxième réseau de communication 32, notamment un réseau Internet.

L'architecture de communication de la figure 1a comporte un dispositif de communication 1, notamment un objet connecté tel qu'un dispositif de communication utilisant la technologie LoRa, aussi nommé Device LoRa en anglais. Le dispositif de communication 1 est connecté à un serveur réseau 4 notamment par l'intermédiaire du premier réseau de communication 31 : un réseau de communication sans fil. Dans le cas d'un objet connecté 1, le premier réseau de communication 31 est un réseau de communication sans fil basse consommation.

L'architecture de communication comporte alors, par exemple, une passerelle 2 recevant les trames émises *t_snd* par un ou plusieurs dispositifs de communication 1 via le premier réseau de communication 31 (les trames t(du) comportant des données utiles du), et transmettant *t_rly* les trames *t(du)* via un deuxième réseau 32, notamment un réseau Internet, notamment, sous forme de paquet à un serveur réseau 4. La passerelle 2 est notamment apte à recevoir des trames dites LoRa, c'est-à-dire émises par un dispositif de communication 1 utilisant la technologie LoRa, la passerelle 2 est alors dite passerelle LoRa, ou encore Gateway LoRa en anglais. Le réseau internet 32 est notamment un réseau mettant en œuvre le protocole TCP/IP.

Lorsque la technologie utilisée par l'objet connecté 1 est LoRa, le serveur réseau 4, Network Server en anglais, NS valide la trame reçue, c'est-à-dire qu'il vérifie si la trame reçue est émise par un objet connecté 1 associé au serveur réseau 4. Le serveur réseau 4, la passerelle 2 et l'objet connecté associé constitue alors une infrastructure opérateur. Si la trame reçue par le serveur réseau 4 appartient à son infrastructure opérateur, alors le serveur réseau 4 procède au traitement de la trame reçue : analyse et/ou stockage... Sinon, la trame reçue est rejetée par le serveur réseau 4, c'est-à-dire qu'il fait comme s'il ne l'avait pas reçue car elle ne l'intéresse pas.

La figure 1b illustre une architecture de communication dans laquelle la passerelle filtre les trames en fonction de leur appartenance à l'infrastructure opérateur du serveur réseau destinataire selon l'invention. L'architecture de communication comporte un premier réseau de communication 31, notamment un réseau de communication sans fil, et un deuxième réseau de communication 32, notamment un réseau Internet.

L'architecture de communication de la figure 1a comporte un dispositif de communication 1, notamment un objet connecté tel qu'un dispositif de communication utilisant la technologie LoRa, aussi nommé Device LoRa en anglais. Le dispositif de communication 1 est connecté à un serveur réseau 4 notamment par l'intermédiaire du premier réseau de communication 31 : un réseau de communication sans fil. Dans le cas d'un objet connecté 1, le premier réseau de communication 31 est un réseau de communication sans fil basse consommation.

L'architecture de communication comporte alors, par exemple, une passerelle 2 recevant les trames émises *t_snd* par un ou plusieurs dispositifs de communication 1 via le premier réseau de communication 31 (les trames *tα, tβ* comportant des données utiles du). La passerelle 2 selon l'invention vérifie l'appartenance *t_app* de la trame *tα, tβ* à l'infrastructure opérateur du serveur réseau destinataire 4α. Puis, la passerelle 2 transmet *t_rly* les trames *tα,* identifiées comme appartenant au serveur réseau destinataire 4α via un deuxième réseau 32, notamment un réseau Internet, par exemple, sous forme de paquet. Sinon, la trame reçue *tβ* est rejetée par la passerelle 2, c'est-à-dire qu'il fait comme s'il ne l'avait pas reçue car elle n'intéresse pas le serveur réseau 4α.

La passerelle 2 est notamment apte à recevoir des trames dites LoRa, c'est-à-dire émises par un dispositif de communication 1 utilisant la technologie LoRa, la passerelle 2 est alors dite passerelle LoRa, ou encore Gateway LoRa en anglais. Le réseau internet 32 est notamment un réseau mettant en œuvre le protocole TCP/IP.

Lorsque la technologie utilisée par l'objet connecté 1 est LoRa, le serveur réseau 4α, Network Server en anglais, NS authentifie la trame reçue *t_auth_{O}.* Puis, le serveur réseau 4 procède au traitement de la trame reçue : analyse et/ou stockage...

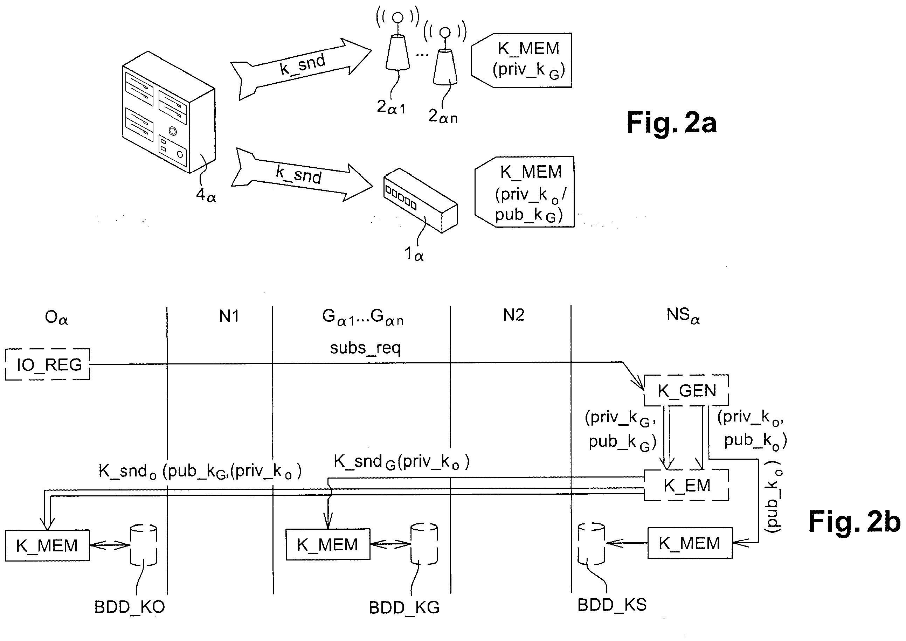

Les figures 2a et 2b illustrent des schémas simplifiés relatifs à la distribution des clés passerelles selon l'invention.

La figure 2a illustre un schéma simplifié d'une mise en œuvre de la distribution des clés passerelle selon l'invention. Le serveur réseau 4α d'une infrastructure opérateur distribue les clés qu'il a généré *k_snd.*

Le serveur réseau 4α distribue une paire de clés asymétriques passerelle constituée d'une clé privée passerelle *priv_k_{G}* et d'une clé publique passerelle pub_k_{G}. La clé publique passerelle pub_k_{G} est envoyée à un dispositif de communication 1α pour lequel elle a été générée et qui la mémorise K_MEM. La clé privée passerelle priv_k_{G} est envoyée à au moins une, voire à toutes les, passerelle(s) 2α₁...2αᵥ de l'infrastructure opérateur du serveur réseau 4α qui la mémorise K_MEM.

Ainsi, le dispositif de communication 1α pourra chiffrera les trames à émettre avec la clé publique passerelle pub_k_{G} permettant à la passerelle 2 recevant les trames de vérifier leur appartenance à l'infrastructure opérateur du serveur réseau destinataire 4 au moyen de la clé privée passerelle priv_k_{G} pour transmettre au serveur réseau destinataire 4 seulement les trames appartenant à son infrastructure opérateur.

En particulier, le serveur réseau 4α distribue, en outre, à un dispositif de communication associé une clé réseau privé priv_ko permettant au dispositif de communication 1α de signer les trames qu'il transmet et au serveur réseau 4α d'authentifier le dispositif de communication 1α émetteur des trames qu'il reçoit.

La figure 2b illustre un schéma simplifié des échanges et des procédés mis en œuvre dans l'architecture de communication lors de la distribution des clés passerelle.

En particulier, lors de la distribution des clés passerelle, le serveur réseau NSα met en oeuvre un procédé de génération de clés passerelle asymétriques K_GEN mis en œuvre lors du rattachement d'un dispositif de communication Oα à une infrastructure opérateur a.

Le procédé de génération de clés passerelle K_GEN comporte une fourniture K_PROV de la paire de clés passerelle générée (priv_k_{G}, pub_k_{G}) en transmettant K_EM au dispositif de communication Oα la clé publique passerelle pub_k_{G} de la paire générée et à au moins une passerelle Gα₁...Gαₙ de l'infrastructure opérateur α la clé privée passerelle de la paire générée priv_k_{G}.

Eventuellement, la génération de clés K_GEN fournit, en outre, une paire de clés réseau propre à un dispositif de communication constituée d'une clé privée réseau *priv_k_{O}* et d'une clé publique réseau pub_k_{O}. La clé privée réseau *priv_k_{O}* est transmise au dispositif de communication Oα. La clé publique réseau pub_k_{O} est, en particulier, enregistré K_MEM par le serveur réseau NSα, par exemple, dans une base de données BDD_KS comportant des clés générées et/ou utilisées par le serveur réseau NSα.

Ainsi, le serveur réseau NSα émet K_EM un signal de transmission de clés comportant la clé privée passerelle k_snd_{G}(priv_k_{G}) à destination d'au moins une passerelle Gα₁...Gαₙ, et un signal de transmission de clés comportant la clé publique passerelle et, le cas échéant, la clé privée réseau k_snd_{O}(pub_ k_{G}, priv_k_{O}) à destination du dispositif de communication Oα.

En particulier, la génération de clés passerelle K_GEN est déclenchée par une réception, par le serveur réseau NSα, d'une demande d'association *subs_req* d'un dispositif de communication à l'infrastructure opérateur du serveur réseau NSα. Notamment, un dispositif de communication Oα met en œuvre un enregistrement dans une infrastructure opérateur IO_REG en envoyant la demande d'association *subs_req*.

En particulier, une passerelle Gα₁...Gαₙ recevant K_REC une clé privée passerelle *priv_k_{G}* l'enregistre K_MEM, par exemple, dans une base de données BDD_KG comportant des clés reçues et/ou utilisées par la passerelle Gα₁...Gαₙ .

En particulier, un dispositif de communication Oα recevant K_REC au moins une clé (dont au moins une clé publique passerelle *pub_k_{G}* et, le cas échant, une clé privée réseau priv_k_{O)} les enregistre K_MEM, par exemple, dans une base de données BDD_KO comportant des clés reçues et/ou utilisées par le dispositif de communication Oα.

Un mode de réalisation particulier du procédé de génération de clés est un programme comprenant des instructions de code de programme pour l'exécution des étapes du procédé de génération de clés lorsque ledit programme est exécuté par un processeur.

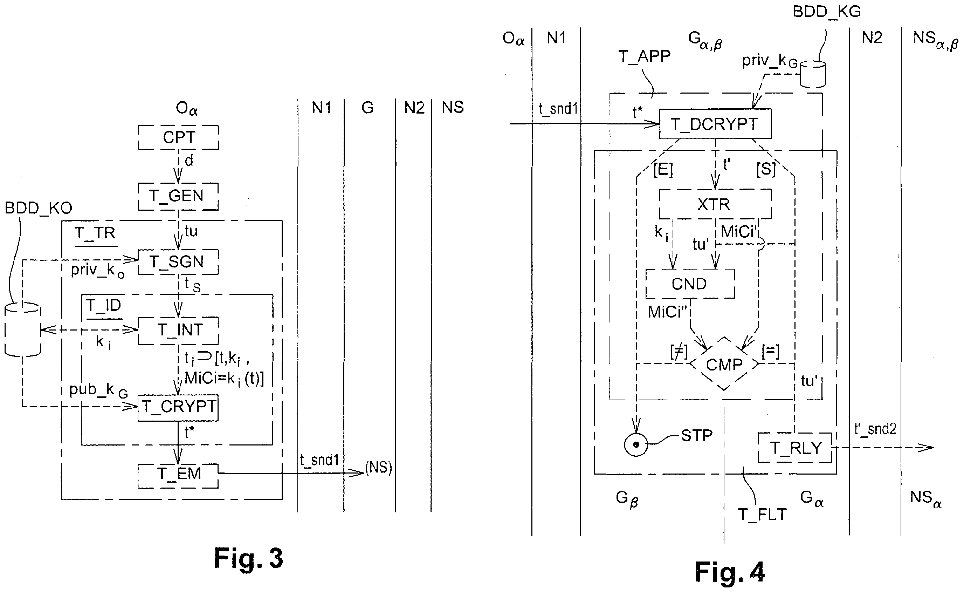

La figure 3 illustre un schéma simplifié des échanges et procédés mis en œuvre dans l'architecture de communication lors de l'envoi de trames d'un dispositif de communication vers un serveur réseau, selon l'invention.

La figure 3 montre, notamment, un procédé d'identification opérateur de trames à émettre T_ID par un dispositif de communication Oα d'une infrastructure opérateur via un premier réseau de communication N1. Le procédé d'identification opérateur T_ID comporte un premier chiffrement T_CRYPT, dit chiffrement passerelle, par le dispositif de communication Oα de l'infrastructure opérateur, d'une trame ts destinée à un serveur réseau NS avec une clé publique passerelle *pub_K_{G}* associée au dispositif de communication Oα dans l'infrastructure opérateur, la clé publique passerelle *pub_K_{G}* étant appairée à une clé privée passerelle *priv_K_{G}* stockée dans au moins une passerelle G de l'infrastructure opérateur.

En particulier, le procédé d'identification T_ID comporte une lecture de la clé publique passerelle *pub_K_{G}* stockée dans le dispositif de communication Oα le mettant en œuvre, par exemple dans une base de données de clés BDD_K_{O} du dispositif de communication Oα. Le dispositif de communication Oα y ayant enregistrée la clé publique passerelle *pub_K_{G}* lors d'une étape d'un procédé mis en œuvre par le dispositif de communication préalablement à la transmission de trames vers un serveur réseau NS tel qu'illustré par la figure 2b, notamment la réception de la clé publique passerelle *pub_K_{G}* suite à son envoi par un procédé de génération de clés mis en œuvre par un serveur réseau NSα et/ou un procédé d'enregistrement du dispositif de communication Oα auprès du serveur réseau NSα.

En particulier, le procédé d'identification opérateur T_ID comporte une génération T_INT d'un condensat *MICI* - *MICI=ki(ts)* - de la trame ts destinée au serveur réseau NS en fonction d'une clé d'intégrité *ki.* Le condensât *MICI* et la clé d'intégrité *ki* sont ajoutés dans la trame ts destinée au serveur réseau NS préalablement au chiffrement passerelle T_CRYPT: *ti=[ki, ts, MICI].* Notamment, le procédé d'identification T_ID comporte une lecture de la clé d'intégrité *ki* stockée dans le dispositif de communication Oα le mettant en oeuvre, par exemple dans une base de données de clés BDD_K_{O} du dispositif de communication Oα.

En particulier, préalablement au premier chiffrement T_CRYPT, un deuxième chiffrement T_SGN, dit chiffrement serveur, d'une trame *tu* destinée à un serveur réseau NS avec une clé privée serveur priv_kO, la clé privée serveur *priv_k_{O}* étant appairée à une clé publique serveur *pub_k_{O}* stockée dans un serveur réseau NS de l'infrastructure opérateur a.

Dans un mode de réalisation particulier, le dispositif de communication Oα met en œuvre un procédé de transmission de trames T_TR via un premier réseau de communication N1. Le procédé transmission de trames T_TR comporte un premier chiffrement T_CRYPT, dit chiffrement passerelle, par le dispositif de communication Oα de l'infrastructure opérateur, d'une trame *ts* destinée à un serveur réseau NS avec une clé publique passerelle *pub_k_{G}* associée au dispositif de communication Oα dans l'infrastructure opérateur.

En particulier, le procédé de transmission T_TR comporte une lecture de la clé publique passerelle *pub_K_{G}* stockée dans le dispositif de communication Oα le mettant en oeuvre, par exemple dans une base de données de clés BDD_K_{O} du dispositif de communication Oα. Le dispositif de communication Oα y ayant enregistrée la clé publique passerelle *pub_K_{G}* lors d'une étape d'un procédé mis en œuvre par le dispositif de communication préalablement à la transmission de trames vers un serveur réseau NS tel qu'illustré par la figure 2b, notamment la réception de la clé publique passerelle *pub_K_{G}* suite à son envoi par un procédé de génération de clés mis en œuvre par un serveur réseau NSα et/ou un procédé d'enregistrement du dispositif de communication Oα auprès du serveur réseau NSα.

En particulier, le procédé de transmission T_TR comporte une émission T_EM via le premier réseau de communication N1 de la trame cryptée t* à destination d'un serveur réseau NS sous la forme d'un signal utile *t_snd1.*

En particulier, le procédé de transmission T_TR comporte, préalablement au premier chiffrement T_CRYPT, un deuxième chiffrement T_SGN, dit chiffrement serveur, d'une trame tu destinée au serveur réseau NS avec une clé privée serveur priv_k_{O}, la clé privée serveur *priv_k_{O}* étant appairée à une clé publique serveur *pub_k_{O}* stockée dans un serveur réseau NS de l'infrastructure opérateur a.

En particulier, le procédé de transmisison T_TR comporte une lecture de la clé privée réseau *priv_K_{O}* stockée dans le dispositif de communication Oα le mettant en œuvre, par exemple dans une base de données de clés BDD_K_{O} du dispositif de communication Oα. Le dispositif de communication Oα y ayant enregistrée la clé privée réseau *priv_K_{O}* lors d'une étape d'un procédé mis en œuvre par le dispositif de communication préalablement à la transmission de trames vers un serveur réseau NS tel qu'illustré par la figure 2b, notamment la réception de la clé privée réseau *priv_K_{O}* suite à son envoi par un procédé de génération de clés mis en œuvre par un serveur réseau NSα et/ou un procédé d'enregistrement du dispositif de communication Oα auprès du serveur réseau NSα.

En particulier, le procédé de transmission T_TR comporte une génération T_INT d'un condensat *MICI* - *MICI*=*ki(ts)* - de la trame ts destinée au serveur réseau NS en fonction d'une clé d'intégrité *ki.* Le condensat *MICI* et la clé d'intégrité *ki* sont ajoutés dans la trame ts destinée au serveur réseau NS préalablement au chiffrement passerelle T_CRYPT: *ti*=*[ki, ts, MICI].* Notamment, le procédé d'identification T_ID comporte une lecture de la clé d'intégrité *ki* stockée dans le dispositif de communication Oα le mettant en œuvre, par exemple dans une base de données de clés BDD_K_{O} du dispositif de communication Oα.

En particulier, le procédé de transmission T_TR comporte le procédé d'identification opérateur T_ID.

En particulier, le dispositif de communication Oα reçoit (non illustré) ou génère T_GEN des trames *tu* à partir de données utiles d. Ces données utiles d sont notamment des données captées suite à une capture CPT mise en œuvre, par exemple, par le dispositif de communication Oα.

Par exemple, le dispositif de communication Oα est un objet connecté de type capteur : capteur de température, caméra, détecteur de présence, détecteur de pluie, lecteur de codes-barres ou codes QR, lecteur de puce RFID... alors les données captées d par le dispositif de communication Oα sont directement distribuées T_GEN en trames à émettre *tu.*

Eventuellement, des objets connectés font parties d'un réseau domotique avec une centrale domotique recevant les données captées d par au moins une partie des objets connectés du réseau domotique, la centrale domotique constitue alors un dispositif de communication Oα selon l'invention et distribue T_GEN les données captées reçues dr en trames à émettre tu. Dans un mode de réalisation non illustré, la centrale domotique Oα effectue des analyses et/ou des traitements des données captées reçues et distribue T_GEN les données captées reçues dr et/ou, les résultats d'analyse ra et/ou de traitement *rt* en trames à émettre *tu.*

En particulier, le dispositif de communication Oα émet T_EM via le premier réseau de communication N1 la trame cryptée t* au moyen du premier chiffrement T_CRYPT à destination d'un serveur réseau NS sous la forme d'un signal utile *t_snd1.* Le serveur destinataire peut être un serveur réseau NS appartenant ou non à la même infrastructure opérateur que le dispositif de communication Oα. Si le serveur réseau NS appartient à la même infrastructure opérateur, il analysera et/ou traitera la trame utile contenue dans la trame cryptée envoyée t*, sinon il l'ignorera.

Le premier chiffrement T_CRYPT permet que le serveur réseau NS ignore la trame envoyée par le dispositif de communication Oα lorsqu'ils n'appartiennent pas à la même infrastructure opérateur α en ce que la passerelle G placée entre les deux ne transmette pas la trame au serveur réseau destinataire NS dans ce cas.

Un mode de réalisation particulier du procédé d'identification opérateur et/ou du procédé de transmission est un programme comprenant des instructions de code de programme pour l'exécution des étapes du procédé d'identification opérateur, et/ou du procédé de transmission lorsque ledit programme est exécuté par un processeur.

La figure 4 illustre un schéma simplifié des échanges et procédés mis en œuvre dans l'architecture de communication lors du filtrage des trames par la passerelle, selon l'invention.

En particulier, la passerelle reçoit T_REC (étape de réception de trames non illustrée) les trames émises t_snd1 par le dispositif de communication Oα via le premier réseau de communication N1, notamment tel qu'illustré par la figure 3.

La passerelle Gα, Gβ met en œuvre, notamment, un procédé de vérification d'appartenance T_APP à une infrastructure opérateur d'un serveur destinataire NSα, NSβ de trames reçues *t_snd* par une passerelle de l'infrastructure opérateur Gα, Gβ. Le procédé de vérification T_APP comporte un premier déchiffrement T_DCRYPT des trames reçues *t** au moyen d'une clé privée passerelle *priv_k_{G}* stockée dans la passerelle Gα, Gβ, dit déchiffrement passerelle. Une réussite [S] du déchiffrement passerelle d'une trame indiquant que la trame déchiffrée t' appartient à l'infrastructure opérateur α, β du serveur destinataire de la trame NSα, NSβ.

En particulier, le procédé de vérification T_APP comporte une comparaison CMP d'un condensat *MICI'* contenu dans la trame déchiffrée *t'avec* un condensat *MICI"* d'une partie utile *tu'* de trame déchiffré générée au moyen d'un clé d'intégrité *k'i* contenu dans la trame déchiffré. Un résultat d'égalité de la comparaison [=] indiquant la réussite [S] du déchiffrement passerelle de la trame.

Ce résultat [S], [=] d'appartenance de la trame déchiffrée *tu'* à l'infrastructure opérateur permet à la passerelle Gα, Gβ de transmettre *t_snd2* via le deuxième réseau de communication N2 au serveur destinataire NSα, NSβ la trame déchiffrée *tu'* appartenant à l'infrastructure opérateur α, β. En particulier, suite à la vérification d'appartenance T_APP, la passerelle met en œuvre une transmission T_RLY au serveur destinataire NSα, NSβ de la trame déchiffrée *tu'* appartenant à l'infrastructure opérateur α, β du serveur destinataire NSα, NSβ.

En particulier, le procédé de filtrage T_FLT comporte, suite au premier déchiffrement T_DCRYPT, une extraction XTR de la trame déchiffrée t'une partie utile tu' de la trame déchiffrée t'. Notamment, l'extraction XTR est déclenchée si le déchiffrement passerelle T_DCRYPT de la trame t'est une réussite [S], [=].

En particulier, le procédé de vérification T_APP comporte une extraction de la trame déchiffrée t' une clé d'intégrité ki', une partie utile tu' de la trame déchiffrée t' et un condensat MICI' puis une génération CND d'un condensat de vérification MICI" de la partie utile tu' extraite en fonction de la clé d'intégrité extraite ki'. Le condensat de vérification MICI" et le condensat extrait MICI' sont fournis à la comparaison CMP.

Dans un mode de réalisation particulier, la passerelle Gα, Gβ met en œuvre un procédé de filtrage T_FLT de trames reçues par une passerelle d'une infrastructure réseau Gα, Gβ. Le procédé de filtrage T_FLT comportant une transmission T_RLY à un serveur réseau de l'infrastructure réseau NSα, NSβ d'au moins une trame tu' reçue d'un dispositif de communication Oα via un premier réseau de communication N1 déchiffrée au moyen d'une clé privée passerelle *priv_k_{G}* stockée dans la passerelle Gα, Gβ si le déchiffrement passerelle T_DCRYPT de la trame est réussi [S].

En particulier, le procédé de filtrage T_FLT comporte un blocage STP d'au moins une trame reçue déchiffrée *tu'* si le déchiffrement passerelle T_DCRYPT de la trame est un échec [E].

Dans un mode de réalisation particulier, suite à la réception T_REC (non illustrée) de trames provenant d'un dispositif de communication Oα, une vérification d'appartenance T_APP des trames reçues à l'infrastructure opérateur du serveur réseau destinataire est mise en oeuvre et, en fonction du réseau de cette vérification d'appartenance T_APP, un filtrage des trames T_FLT permet de transmettre T_RLY au serveur réseau destinataire les trames appartenant à la même infrastructure opérateur que le serveur réseau destinataire, et éventuellement de bloquer les autres trames STP. Ainsi, la mise en œuvre d'un filtrage des trames destinées au serveur réseau en fonction de l'infrastructure opérateur à laquelle elles appartiennent au niveau de la passerelle permet de réduire la charge du deuxième réseau de communication N2 ainsi que la charge de traitement du serveur réseau NS.

En particulier, le procédé de filtrage T_FLT comporte, préalablement, à la transmission T_RLY, une extraction XTR de la trame déchiffrée *t'* une partie utile tu' de la trame déchiffrée *t'*. Notamment, l'extraction XTR est déclenchée si le déchiffrement passerelle T_DCRYPT de la trame *t'* est une réussite [S], [=].

En particulier, le procédé de filtrage T_FLT comporte une comparaison CMP d'un condensat *MICI'* contenu dans la trame déchiffrée t'avec un condensat *MICI"* d'une partie utile *tu'* de trame déchiffré générée au moyen d'un clé d'intégrité *k'i* contenu dans la trame déchiffré. Un résultat d'égalité de la comparaison [=] indiquant la réussite [S] du déchiffrement passerelle de la trame.

En particulier, le procédé de filtrage T_FLT comporte une extraction XTR de la trame déchiffrée t' une clé d'intégrité ki', une partie utile tu' de la trame déchiffrée t' et un condensat MICI' et une génération CND d'un condensat de vérification MICI" de la partie utile tu' extraite en fonction de la clé d'intégrité extraite ki'. Le condensat de vérification MICI" et le condensat extrait MICI' sont fournis à la comparaison CMP.

En particulier, le procédé de filtrage T_FLT comporte un premier déchiffrement T_DCRYPT des trames reçues *t** au moyen d'une clé privée passerelle *priv_k_{G}* stockée dans la passerelle Gα, Gβ, dit déchiffrement passerelle. Une réussite [S] du déchiffrement passerelle d'une trame indiquant que la trame déchiffrée t' appartient à l'infrastructure opérateur α, β du serveur destinataire de la trame NSα, NSβ.

Notamment, le procédé de filtrage T_FLT comporte le procédé de vérification d'appartenance T_APP.

Dans le cas où un dispositif de communication Oα d'une infrastructure opérateur ou première infrastructure opérateur α émet t_snd 1 une trame t* à destination d'un serveur réseau NSα de la même infrastructure opérateur, c'est-à-dire de la première infrastructure opérateur a, la passerelle Gα recevant la trame t* via le premier réseau de communication N1 dispose de la clé privée passerelle *priv_k_{G}* appairée à la clé publique passerelle *pub_k_{G}* utilisée par le dispositif de communication Oα lors du premier chiffrement T_CRYPT fournissant la trame chiffrée t* émise. Par conséquent, le premier déchiffrement T_DCRYPT, aussi nommé déchiffrement passerelle, mis en œuvre par la passerelle Gα utilise la clé privée passerelle *priv_k_{G}* appairée à la clé publique passerelle *pub_k_{G}* utilisée par le dispositif de communication Oα lors du premier chiffrement T_CRYPT fournissant la trame chiffrée t* émise. Le déchiffrement passerelle sera alors réussi [S] dans ce cas indiquant que la trame émise t* appartient à l'infrastructure opérateur α du serveur réseau destinataire NSα. La passerelle Gα fera alors suivre T_RLY via le deuxième réseau de communication N2 la trame déchiffrée t' (au moins la partie utile de cette trame déchifrée tu') au serveur réseau destinataire NSα, par exemple au moyen d'un signal de transmission *t'_snd2.*

Dans le cas où un dispositif de communication Oα d'une infrastructure opérateur ou première infrastructure opérateur α émet t_snd 1 une trame t* à destination d'un serveur réseau NSβ d'une autre infrastructure opérateur, c'est-à-dire d'une deuxième infrastructure opérateur β distincte de la première infrastructure opérateur, la passerelle Gβ recevant la trame t* via le premier réseau de communication N1 ne dispose pas de la clé privée passerelle *priv_k_{G}* appairée à la clé publique passerelle *pub_k_{G}* utilisée par le dispositif de communication Oα lors du premier chiffrement T_CRYPT fournissant la trame chiffrée t* émise.

Soit, la passerelle Gβ ne dispose pour ce dispositif de communication Oα d'aucune clé privée passerelle et, par conséquent, le premier déchiffrement T_DCRYPT, aussi nommé déchiffrement passerelle, mis en œuvre par la passerelle Gα ne peut pas être exécuté.

Soit, la passerelle Gβ dispose pour ce dispositif de communication Oα d'une clé privée passerelle associé à la deuxième infrastructure opérateur *priv_k_{G}*β et, par conséquent, le premier déchiffrement T_DCRYPT, aussi nommé déchiffrement passerelle, mis en oeuvre par la passerelle Gα utilise une clé privée passerelle *priv_k_{G}*β qui n'est pas la clé privée passerelle *priv_k_{G}* appairée à la clé publique passerelle *pub_k_{G}* utilisée par le dispositif de communication Oα lors du premier chiffrement T_CRYPT fournissant la trame chiffrée t* émise. Par conséquent, le déchiffrement passerelle T_DCRYPT fournit un résultat qui ne constitue pas un déchiffrement de la trame reçue t*.

Le déchiffrement passerelle sera alors un échec [E] dans ce cas indiquant que la trame émise t* n'appartient pas à l'infrastructure opérateur β du serveur réseau destinataire NSβ. La passerelle Gβ bloquera éventuellement STP le résultat t' du déchiffrement passerelle, c'est-à-dire que la trame reçue du dispositif de communication Oα ne sera pas transmise au serveur réseau destinataire NSβ.

Un mode de réalisation particulier du procédé de vérification d'appartenance, et/ou du procédé de filtrage est un programme comprenant des instructions de code de programme pour l'exécution des étapes du procédé de vérification d'appartenance, et/ou du procédé de filtrage lorsque ledit programme est exécuté par un processeur.

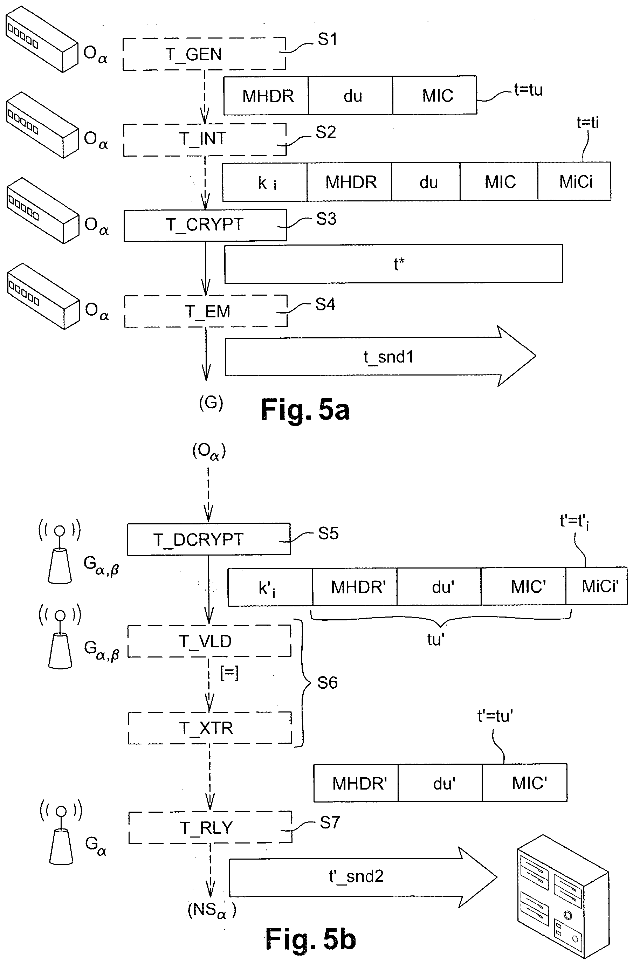

Les figures 5a et 5b illustrent des schémas simplifiés des procédés mis en oeuvre respectivement par le dispositif de communication et par la passerelle selon l'invention.

La figure 5a montre les étapes mises en œuvre par un dispositif de communication Oα selon l'invention.

Notamment, lors d'une étape de génération constituant par exemple une première étape S1, le dispositif de communication Oα génére T_GEN des trames t composant une partie utile tu. Cette trame utile *tu* est composée de données utiles *du* fourni par le dispositif de communication Oα, aussi nommé MACPayload dans la norme LoRa, et, en particulier, d'un en-tête *MHDR,* aussi nommé en-tête de message, et d'un un code d'intégrité *MIC* du message constitué par les données utiles du.

Eventuellement, lors d'une étape d'intégrité constituant par exemple une deuxième étape S2, le dispositif de communication Oα génère T_INT un condensat *MICI* - *MICI=ki(ts)* - de la trame *t* destinée au serveur réseau NS en fonction d'une clé d'intégrité *ki.* Le condensat *MICI* et la clé d'intégrité *ki* sont ajoutés dans la trame t destinée au serveur réseau NS préalablement au chiffrement passerelle T_CRYPT: *t=ti=[ki, ts, MICI].*

Lors d'une étape de premier chiffrement constituant par exemple une troisième étape S3, le dispositif de communication Oα effectue un premier chiffrement T_CRYPT, dit chiffrement passerelle, d'une trame t destinée à un serveur réseau NS avec une clé publique passerelle *pub_K_{G}* associée au dispositif de communication Oα dans l'infrastructure opérateur. La clé publique passerelle *pub_K_{G}* est appairée à une clé privée passerelle *priv_K_{G}* stockée dans au moins une passerelle G de l'infrastructure opérateur.

En particulier, lors d'une étape d'émission constituant par exemple une quatrième étape S4, le dispositif de communication Oα émet T_EM via le premier réseau de communication N1 à une passerelle G la trame chiffrée t*, aussi dite trame cryptée, à destination d'un serveur réseau NS sous la forme d'un signal utile *t_snd1.*

La figure 5b montre les étapes mises en œuvre par une passerelle Gα, Gβ suite à au moins une étape illustrée par la figure 5a.

Lors d'une étape de premier déchiffrement constituant par exemple une cinquième étape S5, la passerelle Gα, Gβ ayant reçue, d'un dispositif de communication Oα, un signal utile t_snd1 comportant une trame chiffrée t* effectue un premier déchiffrement T_DCRYPT des trames reçues *t** au moyen d'une clé privée passerelle *priv_k_{G}* stockée dans la passerelle Gα, Gβ, dit déchiffrement passerelle. Une réussite [S] du déchiffrement passerelle d'une trame indiquant que la trame déchiffrée *t'* appartient à l'infrastructure opérateur α, β du serveur destinataire de la trame NSα, NSβ.

Eventuellement, lors d'une étape de vérification du déchiffrement constituant par exemple une sixième étape S6, la passerelle Gα, Gβ valide la trame déchiffrée notamment au moyen d'une clé d'intégrité ki' comprise dans la trame déchiffrée t'i.

Par exemple, la validation de la trame est effectuée au moyen d'une comparaison CMP d'un condensat *MICI'* contenu dans la trame déchiffrée t' avec un condensat *MICI"* d'une partie utile *tu'* de trame déchiffré générée au moyen d'un clé d'intégrité *k'i* contenu dans la trame déchiffré. Un résultat d'égalité de la comparaison [=] indiquant la réussite [S] du déchiffrement passerelle de la trame.

Eventuellement, lors de l'étape de vérification du déchiffrement S6, la passerelle Gα, Gβ extrait T_XTR la partie utile tu' de la trame déchiffrée t'. Soit cette extraction T_XTR est effectuée après la validation de la trame T_VLD fournissant ainsi la trame utile tu' à faire suivre au serveur réseau uniquement si le déchiffrement est réussi comme le montre la figure 5b.

Soit cette extraction T_XTR est effectuée avant la validation de la trame T_VLD permettant de fournir à la validation une clé d'intégrité ki', une partie utile tu' de la trame déchiffrée t' et un condensat MICI'. En effet, la trame déchiffrée t'=t'i comporte, si le déchiffrement est réussi :
- une clé d'intégrité déchiffrée ki' correspondant à la clé d'intégrité ki utilisé par le dispositif de communication et ajouté à la trame lors de l'étape d'intégrité S2,
- le condensât déchiffré MICI' correspondant au condensat MICI généré par le dispositif de communication et ajouté à la trame lors de l'étape d'intégrité S2, et
- la trame utile déchiffrée tu' comportant l'en-tête déchiffrée MHDR, les données utiles déchiffrées du' et le code d'intégrité du message déchiffré MIC'.

Alors, la validation de la trame T_VLD comportera, éventuellement, une génération CND d'un condensat de vérification MICI" de la partie utile tu' extraite en fonction de la clé d'intégrité extraite ki'. Le condensat de vérification MICI" et le condensat extrait MICI' sont fournis à la comparaison CMP.

Le cas échant, lors d'une étape de transmission constituant par exemple une septième étape S7, ce résultat [S], [=] d'appartenance de la trame déchiffrée *tu'* à l'infrastructure opérateur permet à la passerelle Gα de transmettre *t_snd2* via le deuxième réseau de communication N2 au serveur destinataire NSα la trame déchiffrée tu' appartenant à l'infrastructure opérateur α. En particulier, suite à la vérification d'appartenance T_APP, la passerelle met en œuvre une transmission T_RLY au serveur destinataire NSα de la trame déchiffrée *tu'* appartenant à l'infrastructure opérateur α du serveur destinataire NSα.

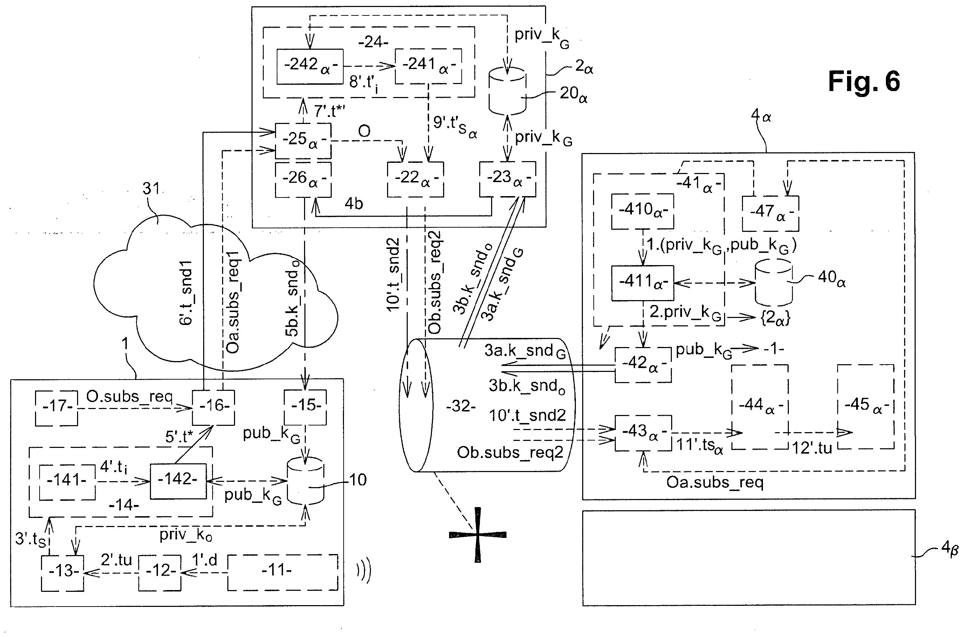

La figure 6 illustre un schéma simplifié d'une architecture de communication selon l'invention. L'architecture de communication est composé d'un premier réseau de communication 31 (réseau local) et d'un deuxième réseau de communication (réseau distant) mettant en relation des dispositifs de communication 1 avec un ou plusieurs serveurs réseau 4α, 4β appartenant éventuellement à différentes infrastructure opérateur α, β. Un dispositif de communication peut être appartenir à une ou plusieurs infrastructure opérateur distinctes.

Un serveur réseau 4α, 4β d'une infrastructure opérateur est aptes à recevoir des trames émises par un dispositif de communication 1 via un premier réseau de communication 31 et relayées par une passerelle 2α via un deuxième réseau de communication 32. Comme illustré pour le serveur réseau 4α de la figure 6, le serveur réseau 4α, 4β comporte un analyseur 45α de trames reçues. L'analyseur 45α est alimenté par toutes les trames provenant de la passerelle 2α. La passerelle 2α permet la transmission au serveur réseau 4α, 4β d'une trame reçue d'un dispositif de communication si le déchiffrement passerelle, au moyen d'une clé privée passerelle stockée dans la passerelle, de la trame reçue du dispositif de communication est réussi.

En particulier, le serveur réseau 4α comporte un générateur 410α de paires de clés passerelle fournissant 1.(*priv_k_{G}*, *pub_k_{G}*) une clé publique passerelle *pub_k_{G}* à un dispositif de communication 1 et une clé privée passerelle *priv_k_{G}* à au moins une passerelle 2α de l'infrastructure opérateur α lors du rattachement du dispositif de communication 1 à une infrastructure opérateur α comportant le serveur réseau 4α.

En particulier, le générateur de clés 410α génère en outre une paire de clés réseau (*priv_k_{O}, pub_k_{O}*) associée au dispositif de communication 1 demandeur du rattachement. Le serveur réseau 4α stocke la clé publique réseau *pub_k_{O},* notamment dans une base de données 40α du serveur réseau 4α

En particulier, le serveur réseau 4α comporte un fournisseur de clés 41α paires de clés passerelle (*priv_k_{G}, pub_k_{G}*) fournissant 2.*priv_k_{G}→{2*α*}, pub_k_{G}→1* une clé publique passerelle *pub_k_{G}* à un dispositif de communication 1 et une clé privée passerelle *priv_k_{G}* à au moins une passerelle 2α. Le fournisseur de clés 41α comprenant par exemple le générateur de clés 410α. Notamment, le fournisseur de clés 41α comprend en outre un générateur de signalisation 411α mettant en forme la paire de clés à fournir, par exemple la paire de clés générées par le générateur de clés410α. Le signal de signalisation ainsi produit permet de distribuer les clés de la paire de clés générées : par exemple, une clé publique passerelle *pub_k_{G}* à un dispositif de communication 1 et une clé privée passerelle *priv_k_{G}* à au moins une passerelle 2 de l'infrastructure opérateur a, et/ou une clé publique réseau *pub_k_{O}* au serveur réseau 4α et une clé privée réseau *priv_k_{O}* à un dispositif de communication 1, etc.

Le serveur réseau 4α comporte notamment un souscripteur 47α recevant une demande de rattachement 0. subs_req d'un dispositif de communication 1 à l'infrastructure α comportant le serveur réseau 4a. Eventuellement, le souscripteur 47α commande soit au générateur 410 α de produire, soit au fournisseur de clés 41α de fournir une paire de clés passerelle (*priv_k_{G}, pub_k_{G}*) associée au dispositif de communication 1 demandant le rattachement.

En particulier, le serveur réseau 4α comporte un émetteur 42α et un récepteur 42α sur le deuxième réseau de communication 32. Ainsi, l'émetteur 42α transmet les clés via le deuxième réseau de communication 32 au(x) passerelle(s) 2α : 3a.k_snd_{G}, et au dispositif de communication 1 : 3b.k_snd_{O}. Le signal à destination du dispositif de communication 3b.k_snd_{O} comporte la clé publique passerelle *pub_k_{G}* et, le cas échéant, la clé privé réseau *priv_k_{O}.* La passerelle reçoit les deux signaux 3a.k_snd_{G} et 3b.k_snd_{O}, notamment au moyen d'un deuxième récepteur 23α, et fait suivre celui destiné au dispositif de communication 1 via le premier réseau de communication 31, notamment au moyen d'un premier émetteur 26α.

En particulier, la passerelle 2α stocke la clé privée passerelle reçue *priv_k_{G},* notamment dans une base de données 20α de la passerelle. Et, le dispositif de communication 1 stocke la(les) clé(s) reçue(s) : la clé publique passerelle *pub_k_{G}* et, le cas échéant, la clé privé réseau *priv_k_{O},* notamment dans une base de données 10 du dispositif de communication 1.

Le dispositif de communication 1 comporte, en particulier, un émetteur 16 et un récepteur 16 via un premier réseau de communication 31.

Le dispositif de communication 1 comporte notamment un enregistreur 17 dans une infrastructure opérateur a apte à demander 0.subs_req à un serveur réseau 4α de l'infrastructure opérateur α un rattachement du dispositif de communication 1 à cette infrastructure opérateur a. En particulier, la demande de rattachement 0.subs_req est émise 0a.subs_req1 par l'émetteur 16 via le premier réseau 31. Le serveur réseau 4α étant connecté à un deuxième réseau de communication 32, une passerelle 2α fait suivre la demande de rattachement 0b.subs_req2 au serveur réseau 4α via le deuxième réseau de communication 32, notamment au moyen d'un premier récepteur 25α recevant la demande via le premier réseau de communication 31 et d'un deuxième émetteur 22α l'envoyant via le deuxième réseau de communication. Ainsi, le récepteur 43α du serveur réseau reçoit la demande de rattachement et, par exemple, commande 0.subs_req en conséquence le souscripteur 47α.

Le dispositif de communication 1 d'une infrastructure opérateur, c'est-à-dire rattaché à une infrastructure opérateur : l'infrastructure opérateur α dans l'exemple de la figure 6, est apte à transmettre des trames via un premier réseau de communication 31, notamment grâce à son émetteur 16 et son récepteur 15. Le dispositif de communication 1 comporte un premier chiffreur 142, dit chiffreur passerelle. Le chiffreur passerelle 142 est apte à chiffrer au moins un trame 3'.ts destinée à un serveur de l'infrastructure opérateur avec une clé publique passerelle *pub_k_{G}* associée au dispositif de communication 1 dans l'infrastructure opérateur. La clé publique passerelle est appairée à une clé privée passerelle stockée dans au moins une passerelle 2α de l'infrastructure opérateur a.

En particulier, le premier réseau de communication 31 est un réseau de communication sans fil basse consommation.

En particulier, le dispositif de communication 1 comporte au moins un capteur 11 fournissant des données utiles 1'.d à transmettre à un serveur réseau.

En particulier, le dispositif de communication 1 comporte un générateur de trames 12 mettant les données utiles d à transmettre sous forme de trames 2'.tu. Eventuellement, le dispositif de communication 1 comporte un deuxième chiffreur 13 signant les trames au moyen d'une clé privé réseau *priv_K_{O}.* Les trames 2'.t, 3'.ts sont fournies au premier chiffreur 142 soit directement soit indirectement. Dans le cas où elles sont fournies indirectement, elles sont d'abord fournies à un générateur de condensat 141 calculant un condensât d'intégrité au moyen d'une clé d'intégrité *ki* et fournissant au premier chiffreur 142 une trame 4'.ti comportant en plus de la trame fournie 2'.t, 3'.ts, la clé d'intégrité *ki* utilisée et le condensat d'intégrité généré *MICI.*

Eventuellement, un identificateur d'infrastructure opérateur 14 comporte le générateur de condensat 141 et le premier chiffreur 142.

La trame chiffrée 5'.t* est fournie par le premier chiffreur 142 pour être transmise à un serveur réseau 4α, 4β via le premier réseau de communication 31 notamment au moyen de l'émetteur 16.

La passerelle 2α d'une infrastructure opérateur est apte à transmettre des trames reçues d'un dispositif de communication 1 via un premier réseau de communication 31 à un serveur réseau 4α, 4β de l'infrastructure opérateur via un deuxième réseau de communication 32. La passerelle 2 α comporte un filtre de trames 24 a apte à transmettre une trame reçue déchiffrée au moyen d'une clé privée passerelle *priv_k_{G}* stockée dans la passerelle 2α si le déchiffrement passerelle de la trame est réussi.

En particulier, la passerelle 2α reçoit, au moyen d'un premier récepteur 25α, une trame émise 6'.t_snd1 par un dispositif de communication 1 via le premier réseau de communication 31. La passerelle comporte, par exemple, un premier déchiffreur 242 α utilisant une clé privée passerelle *priv_k_{G}* stockée dans la passerelle 2α. Le récepteur 25α fournit la trame reçue 7'.t*' au premier déchiffreur 242α qui élabore la trame déchiffrée *8'.ti, 9'.ts.* Si le déchiffreur 242α réussi son opération sur la trame reçue, c'est-à-dire s'il utilise la clé privée passerelle appariée à la clé publique passerelle utilisée par le dispositif de communication 1 pour chiffrer la trame. Le filtre 24α fournit la trame déchiffrée 9'.tsα pour qu'elle soit transmise, notamment au moyen du deuxième émetteur 22α de la passerelle 2α, via le deuxième réseau de communication 32 au serveur réseau 4α destinataire si le déchiffrement est réussi. Dans le cas de la figure 6, le dispositif de communication 1 étant rattaché à une première infrastructure opérateur α comportant le serveur réseau 49'.tsα, les trames lui étant destiné 9'.tsα sont transmises par la passerelle 2α: 10'.t_snd2. Eventuellement, si les trames sont destinées à un serveur réseau 4β d'une deuxième infrastructure opérateur β, le filtre 24 les bloque comme le montre la croix sur la transmission destinée au serveur réseau 4β.

Ainsi, le serveur réseau 4α ne reçoit que les trames appartenant à la même infrastructure opérateur α que lui :10'.t_snd2 notamment au moyen du récepteur 43α. L'analyseur 45α effectue donc ses opérations uniquement sur les trames provenant d'un dispositif de communication rattaché à la même infrastructure opérateur.

Eventuellement, le serveur réseau 4α comporte en outre un deuxième déchiffreur 44 α authentifiant le dispositif de communication 1 expéditeur de la trame 11'.tsα au moyen de la clé publique réseau *pub_k_{O}.* Le deuxième déchiffreur 44 α fournit la trame authentifié 12'. tu à l'analyseur 45α.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

## Revendications

1. Procédé d'identification opérateur de trames à émettre par un dispositif de communication (1, Oa) d'une infrastructure opérateur (a) via un premier réseau de communication (31, N1), le procédé d'identification opérateur (T_ID) comportant un premier chiffrement (T_CRYPT), dit chiffrement passerelle, par le dispositif de communication (1, Oa) de l'infrastructure opérateur (α), d'une trame (tu, ts) destinée à un serveur réseau (4, 4α, 4β, NS, NSα, NSβ) avec une clé publique passerelle (pub_k_{G}) associée au dispositif de communication (1, Oa) dans l'infrastructure opérateur (α), la clé publique passerelle (pub_k_{G}) étant appairée à une clé privée passerelle (priv_k_{G}) stockée dans au moins une passerelle (2, G) de l'infrastructure opérateur (α), la clé publique passerelle associée au dispositif de communication ayant été générée lors du rattachement du dispositif de communication à l'infrastructure opérateur.

2. Procédé d'identification opérateur selon la revendication précédente, **caractérisé en ce que** le procédé d'identification opérateur (T_ID) comporte une génération (T_INT) d'un condensat (MICI) de la trame (tu, ts) destinée au serveur réseau (4, 4α, 4β, NS, NSα, NSβ) en fonction d'une clé d'intégrité (ki), le condensat (MICI) et la clé d'intégrité (ki) étant ajoutés dans la trame (tu, ts, ti) destinée au serveur réseau (4, 4α, 4β, NS, NSα, NSβ) préalablement au chiffrement passerelle (T_CRYPT).

3. Procédé de transmission de trames par un dispositif de communication (1, Oa) d'une infrastructure opérateur (a) via un premier réseau de communication (31, N1), le procédé transmission de trames (T_TR) comportant un premier chiffrement (T_CRYPT), dit chiffrement passerelle, par le dispositif de communication (1, Oa) de l'infrastructure opérateur (α), d'une trame destinée à un serveur réseau (4, 4α, 4β, NS, NSα, NSβ) avec une clé publique passerelle associée au dispositif de communication (1, Oa) dans l'infrastructure opérateur (α), la clé publique passerelle étant appairée à une clé privée passerelle stockée dans au moins une passerelle (2, G) de l'infrastructure opérateur (α), la clé publique passerelle associée au dispositif de communication ayant été générée lors du rattachement du dispositif de communication à l'infrastructure opérateur.

4. Procédé de transmission de trames selon la revendication précédente, **caractérisé en ce que** le procédé de transmission (T_TR) comporte, préalablement au premier chiffrement (T_CRYPT), un deuxième chiffrement (T_SGN), dit chiffrement serveur, d'une trame (tu) destinée à un serveur réseau (4, 4α, 4β, NS, NSα, NSβ) avec une clé privée serveur (priv_kO), la clé privée serveur (priv_kO) étant appairée à une clé publique serveur (pub_kO) stockée dans un serveur réseau (4, 4α, 4β, NS, NSα, NSβ) de l'infrastructure opérateur (a).

5. Procédé de vérification d'appartenance à une infrastructure opérateur (a) d'un serveur destinataire de trames reçues (t_send, tα, tβ) par une passerelle (2, G) de l'infrastructure opérateur (a) en provenance d'un dispositif de communication, le procédé de vérification (T_APP) comportant un premier déchiffrement (T_DCRYPT) des trames reçues (t*) au moyen d'une clé privée passerelle (priv_k_{G}) stockée dans la passerelle (2, G, Gα, Gβ), dit déchiffrement passerelle, la clé privée passerelle ayant été générée lors du rattachement du dispositif de communication à une infrastructure opérateur, une réussite ([S]) du déchiffrement passerelle d'une trame indiquant que la trame déchiffrée (t') appartient à l'infrastructure opérateur (α, β).

6. Procédé de vérification d'appartenance selon la revendication précédente, **caractérisé en ce que** le procédé de vérification (T_APP) comporte une comparaison (CMP) d'un condensat (MICI') contenu dans la trame déchiffrée (t') avec un condensat (MICI") d'une partie utile (tu') de trame déchiffré générée au moyen d'un clé d'intégrité (k'i) contenu dans la trame déchiffré, un résultat d'égalité de la comparaison ([=]) indiquant la réussite ([S]) du déchiffrement passerelle de la trame.

7. Procédé de filtrage de trames reçues par une passerelle (2, G) d'une infrastructure réseau en provenance d'un dispositif de communication, le procédé de filtrage (T_FLT) comportant une transmission (T_RLY) à un serveur réseau (4, 4α, 4β, NS, NSα, NSβ) de l'infrastructure réseau d'au moins une trames (tu') reçues d'un dispositif de communication (1, Oa) via un premier réseau de communication (31, N1) déchiffrées au moyen d'une clé privée passerelle (priv_k_{G}) stockée dans la passerelle (2, G) si le déchiffrement passerelle (T_DCRYPT) de la trame est réussi ([S]), la clé privée passerelle ayant été générée lors du rattachement du dispositif de communication à une infrastructure opérateur.

8. Procédé de filtrage selon la revendication précédente, **caractérisé en ce que** le procédé de filtrage (T_FLT) comporte un blocage (STP) d'au moins une trame reçue déchiffrée (tu') si le déchiffrement passerelle (T_DCRYPT) de la trame est un échec ([E]).

9. Procédé de génération de clés passerelle asymétriques mis en œuvre lors du rattachement d'un dispositif de communication (1, Oa) à une infrastructure opérateur (α), le procédé de génération de clés passerelle (K_GEN) comportant une génération d'une paire (pub_k_{G}, priv_k_{G}) de clés passerelle et une fourniture (K_PROV) de la paire (pub_k_{G}, priv_k_{G}) de clés passerelle générée en transmettant (K_EM) au dispositif de communication (1, Oa) la clé publique passerelle (pub_k_{G}) de la paire générée et à au moins une passerelle (2, 2_{α1}...2_{αN}, G, G_{α1}...G_{αN},) de l'infrastructure opérateur (a) la clé privée passerelle (priv_k_{G}) de la paire générée.

10. Programme comprenant des instructions de code de programme pour l'exécution des étapes du procédé d'identification opérateur (T_ID) selon l'une quelconque des revendications 1 ou 2, et/ou du procédé de transmission (T_TR) selon l'une quelconque des revendications 3 ou 4 ou du procédé de vérification d'appartenance (T_APP) selon l'une quelconque des revendications 5 ou 6, et/ou du procédé de filtrage selon l'une quelconque des revendications 7 ou 8, ou du procédé de génération de clés selon la revendication précédente lorsque ledit programme est exécuté par un processeur.

11. Dispositif de communication d'une infrastructure opérateur (a) apte à transmettre des trames via un premier réseau de communication (31, N1), le dispositif de communication (1, Oa) comportant un premier chiffreur (142), dit chiffreur passerelle, le chiffreur passerelle (142) étant apte à chiffrer au moins une trame (ts) destinée à un serveur (4, 4α, 4β, NS, NSα, NSβ) de l'infrastructure opérateur (α, β) avec une clé publique passerelle (pub_k_{G}) associée au dispositif de communication (1, Oa) dans l'infrastructure opérateur (α, β), la clé publique passerelle (pub_k_{G}) étant appairée à une clé privée passerelle (priv_k_{G}) stockée dans au moins une passerelle (2, 2α, G) de l'infrastructure opérateur (α, β), la clé publique passerelle associée au dispositif de communication ayant été générée lors du rattachement du dispositif de communication à l'infrastructure opérateur.

12. Dispositif de communication selon la revendication précédente, **caractérisé en ce que** le premier réseau de communication (31, N1) est un réseau de communication sans fil basse consommation.

13. Passerelle d'une infrastructure opérateur apte à transmettre des trames reçues d'un dispositif de communication (1, Oa) via un premier réseau de communication (31, N1) à un serveur réseau (4, 4α, 4β, NS, NSα, NSβ) de l'infrastructure opérateur (a) via un deuxième réseau de communication (32, N2), la passerelle (2, 2α, G) comportant un filtre de trames (24α) apte à transmettre une trame reçue déchiffrée au moyen d'une clé privée passerelle (priv_k_{G}) stockée dans la passerelle (2, 2α, G) si le déchiffrement passerelle de la trame est réussi, la clé privée passerelle ayant été générée lors du rattachement du dispositif de communication à une infrastructure opérateur.

14. Serveur réseau d'une infrastructure opérateur (α, β) aptes à recevoir des trames émises (t_send, tα, tβ) par un dispositif de communication (1, Oa) via un premier réseau de communication (31, N1) et relayées par une passerelle (2, 2α, G) via un deuxième réseau de communication (32, N2), le serveur réseau (4α, NSα) comportant :
• un analyseur (45α) de trames reçues, l'analyseur (45α) étant alimentés partoutes les trames provenant de la passerelle (2α);
• un générateur (410α) de paires (priv_k_{G}, pub_k_{G}) de clés passerelle générant et fournissant une clé publique passerelle (pub_k_{G}) à un dispositif de communication (1, Oa) et une clé privée passerelle (priv_k_{G}) à au moins une passerelle (2α) de l'infrastructure opérateur (a) lors du rattachement du dispositif de communication (1, Oa) à une infrastructure opérateur (a) comportant le serveur réseau (4α, NSα).

## Patentansprüche

1. Verfahren zur Betreiberidentifizierung von Frames, die von einer Kommunikationsvorrichtung (1, O_{α}) einer Betreiberinfrastruktur (a) über ein erstes Kommunikationsnetz (31, N1) gesendet werden sollen, wobei das Betreiberidentifizierungsverfahren (T_ID) eine erste Verschlüsselung (T_CRYPT), Gateway-Verschlüsselung genannt, durch die Kommunikationsvorrichtung (1, O_{α}) der Betreiberinfrastruktur (α), eines für einen Netzserver (4, 4_{α}, 4_{β}, NS, NSα, NS_{β}) bestimmten Frames (tu, ts) mit einem öffentlichen Gateway-Schlüssel (pub_k_{G}) aufweist, der der Kommunikationsvorrichtung (1, O_{α}) in der Betreiberinfrastruktur (a) zugeordnet ist, wobei der öffentliche Gateway-Schlüssel (pub_k_{G}) mit einem privaten Gateway-Schlüssel (priv_k_{G}) paarweise verbunden ist, der in mindestens einem Gateway (2, G) der Betreiberinfrastruktur (a) gespeichert ist, wobei der der Kommunikationsvorrichtung zugeordnete öffentliche Gateway-Schlüssel bei der Verbindung der Kommunikationsvorrichtung mit der Betreiberinfrastruktur generiert worden ist.

2. Betreiberidentifizierungsverfahren nach dem vorhergehenden Anspruch, **dadurch gekennzeichnet, dass** das Betreiberidentifizierungsverfahren (T_ID) eine Generierung (T_INT) eines Kondensats (MICI) des für den Netzserver (4, 4_{α}, 4_{β}, NS, NSα, NS_{β}) bestimmten Frames (tu, ts) abhängig von einem Integritätsschlüssel (ki) aufweist, wobei das Kondensat (MICI) und der Integritätsschlüssel (ki) vor der Gateway-Verschlüsselung (T_CRYPT) in den für den Netzserver (4, 4_{α}, 4_{β}, NS, NSα, NS_{β}) bestimmten Frame (tu, ts, ti) hinzugefügt werden.

3. Verfahren zur Übertragung von Frames durch eine Kommunikationsvorrichtung (1, Oa) einer Betreiberinfrastruktur (a) über ein erstes Kommunikationsnetz (31, N1), wobei das Verfahren zur Übertragung von Frames (T_TR) eine erste Verschlüsselung (T_CRYPT), Gateway-Verschlüsselung genannt, durch die Kommunikationsvorrichtung (1, Oa) der Betreiberinfrastruktur (α), eines für einen Netzserver (4, 4_{α}, 4_{β}, NS, NS_{α}, NS_{β}) bestimmten Frames mit einem öffentlichen Gateway-Schlüssel aufweist, der der Kommunikationsvorrichtung (1, Oa) in der Betreiberinfrastruktur (a) zugeordnet ist, wobei der öffentliche Gateway-Schlüssel mit einem privaten Gateway-Schlüssel paarweise verbunden ist, der in mindestens einem Gateway (2, G) der Betreiberinfrastruktur (a) gespeichert ist, wobei der der Kommunikationsvorrichtung zugeordnete öffentliche Gateway-Schlüssel bei der Verbindung der Kommunikationsvorrichtung mit der Betreiberinfrastruktur generiert worden ist.

4. Verfahren zur Übertragung von Frames nach dem vorhergehenden Anspruch, **dadurch gekennzeichnet, dass** das Übertragungsverfahren (T_TR) vor der ersten Verschlüsselung (T_CRYPT) eine zweite Verschlüsselung (T_SGN), Server-Verschlüsselung genannt, eines für einen Netzserver (4, 4_{α}, 4_{β}, NS, NS_{α}, NS_{β}) bestimmten Frames (tu) mit einem privaten Server-Schlüssel (priv_kO) aufweist, wobei der private Server-Schlüssel (priv_kO) mit einem öffentlichen Server-Schlüssel (pub_kO) paarweise verbunden ist, der in einem Netzserver (4, 4_{α}, 4_{β}, NS, NS_{α}, NS_{β}) der Betreiberinfrastruktur (α) gespeichert ist.

5. Verfahren zur Überprüfung der Zugehörigkeit eines Servers zu einer Betreiberinfrastruktur (α), der Zieladresse von durch ein Gateway (2, G) der Betreiberinfrastruktur (α) empfangenen Frames (t_send, t_{α}, t_{β}) aus einer Kommunikationsvorrichtung ist, wobei das Überprüfungsverfahren (T_APP) eine erste Entschlüsselung (T_DCRYPT) der empfangenen Frames (t*) mittels eines im Gateway (2, G, G_{α}, G_{β}) gespeicherten privaten Gateway-Schlüssels (priv_k_{G}) , Gateway-Entschlüsselung genannt, aufweist, wobei der private Gateway-Schlüssel bei der Verbindung der Kommunikationsvorrichtung mit einer Betreiberinfrastruktur generiert worden ist, wobei ein Erfolg ([S]) der Gateway-Entschlüsselung eines Frames anzeigt, dass der entschlüsselte Frame (t') zur Betreiberinfrastruktur (α, β) gehört.

6. Zugehörigkeitsüberprüfungsverfahren nach dem vorhergehenden Anspruch, **dadurch gekennzeichnet, dass** das Überprüfungsverfahren (T_APP) einen Vergleich (CMP) eines im entschlüsselten Frame (t') enthaltenen Kondensats (MICI') mit einem Kondensat (MICI") eines Nutzbereichs (tu') eines entschlüsselten Frames aufweist, der mittels eines im entschlüsselten Frame enthaltenen Integritätsschlüssel (k'i) generiert wird, wobei ein Gleichheitsergebnis des Vergleichs ([=]) den Erfolg ([S]) der Gateway-Entschlüsselung des Frames anzeigt.

7. Verfahren zum Filtern von Frames, die von einer Kommunikationsvorrichtung kommend von einem Gateway (2, G) einer Netzinfrastruktur empfangen werden, wobei das Filterverfahren (T_FLT) eine Übertragung (T_RLY) an einen Netzserver (4, 4_{α}, 4_{β}, NS, NS_{α}, NS_{β}) der Netzinfrastruktur mindestens eines von einer Kommunikationsvorrichtung (1, Oa) über ein erstes Kommunikationsnetz (31, N1) empfangenen, mittels eines im Gateway (2, G) gespeicherten privaten Gateway-Schlüssels (priv_k_{G}) entschlüsselten Frames (tu') aufweist, wenn die Gateway-Entschlüsselung (T_DCRYPT) des Frames erfolgreich ist ([S]), wobei der private Gateway-Schlüssel bei der Verbindung der Kommunikationsvorrichtung mit einer Betreiberinfrastruktur generiert worden ist.

8. Filterverfahren nach dem vorhergehenden Anspruch, **dadurch gekennzeichnet, dass** das Filterverfahren (T_FLT) eine Blockierung (STP) mindestens eines entschlüsselten empfangenen Frames (tu') aufweist, wenn die Gateway-Entschlüsselung (T_DCRYPT) des Frames ein Misserfolg ([E]) ist.

9. Verfahren zur Generierung von asymmetrischen Gateway-Schlüsseln, das bei der Verbindung einer Kommunikationsvorrichtung (1, Oa) mit einer Betreiberinfrastruktur (α) durchgeführt wird, wobei das Verfahren zur Generierung von Gateway-Schlüsseln (K_GEN) eine Generierung eines Paars (pub_k_{G}, priv_k_{G}) von Gateway-Schlüsseln und eine Lieferung (K_PRO) des generierten Paars (pub_k_{G}, priv_k_{G}) von Gateway-Schlüsseln aufweist, indem der öffentliche Gateway-Schlüssel (pub_k_{G}) des generierten Paars an die Kommunikationsvorrichtung (1, Oa) und der private Gateway-Schlüssel (priv_k_{G}) des generierten Paars an mindestens ein Gateway (2, 2_{α1}...2_{αN}, G, G_{α1}...G_{αN}) der Betreiberinfrastruktur (α) übertragen wird (K_EM).

10. Programm, das Programmcodeanweisungen für die Ausführung der Schritte des Betreiberidentifizierungsverfahrens (T_ID) nach einem der Ansprüche 1 oder 2 und/oder des Übertragungsverfahrens (T_TR) nach einem der Ansprüche 3 oder 4 oder des Überprüfungsverfahrens der Zugehörigkeit (T_APP) nach einem der Ansprüche 5 oder 6 und/oder des Filterverfahrens nach einem der Ansprüche 7 oder 8 oder des Generierungsverfahrens von Schlüsseln nach dem vorhergehenden Anspruch enthält, wenn das Programm von einem Prozessor ausgeführt wird.

11. Kommunikationsvorrichtung einer Betreiberinfrastruktur (α), die Frames über ein erstes Kommunikationsnetz (31, N1) übertragen kann, wobei die Kommunikationsvorrichtung (1, Oa) einen ersten Verschlüssler (142) aufweist, Gateway-Verschlüssler genannt, wobei der Gateway-Verschlüssler (142) geeignet ist, mindestens einen für einen Server (4, 4_{α}, 4_{β}, NS, NS_{α}, NS_{β}) der Betreiberinfrastruktur (α, β) bestimmten Frame (ts) mit einem öffentlichen Gateway-Schlüssel (pub_k_{G}) zu verschlüsseln, der der Kommunikationsvorrichtung (1, Oa) in der Betreiberinfrastruktur (α, β) zugeordnet ist, wobei der öffentliche Gateway-Schlüssel (pub_k_{G}) mit einem privaten Gateway-Schlüssel (priv_k_{G}) paarweise verbunden ist, der in mindestens einem Gateway (2, 2_{α}, G) der Betreiberinfrastruktur (α, β) gespeichert ist, wobei der der Kommunikationsvorrichtung zugeordnete öffentliche Gateway-Schlüssel bei der Verbindung der Kommunikationsvorrichtung mit der Betreiberinfrastruktur generiert worden ist.

12. Kommunikationsvorrichtung nach dem vorhergehenden Anspruch, **dadurch gekennzeichnet, dass** das erste Kommunikationsnetz (31, N1) ein drahtloses Kommunikationsnetz mit niedrigem Verbrauch ist.

13. Gateway einer Betreiberinfrastruktur, das geeignet ist, von einer Kommunikationsvorrichtung (1, O_{α}) über ein erstes Kommunikationsnetz (31, N1) empfangene Frames an einen Netzserver (4, 4_{α}, 4_{β}, NS, NS_{α}, NS_{β}) der Betreiberinfrastruktur (a) über ein zweites Kommunikationsnetz (32, N2) zu übertragen, wobei das Gateway (2, 2_{α}, G) ein Filter von Frames (24_{α}) aufweist, das geeignet ist, einen mittels eines im Gateway (2, 2_{α}, G) gespeicherten privaten Gateway-Schlüssels (priv_k_{G}) entschlüsselten empfangenen Frame zu übertragen, wenn die Gateway-Entschlüsselung des Frames erfolgreich ist, wobei der private Gateway-Schlüssel bei der Verbindung der Kommunikationsvorrichtung mit einer Betreiberinfrastruktur generiert worden ist.

14. Netzserver einer Betreiberinfrastruktur (α, β), der geeignet ist, Frames zu empfangen, die von einer Kommunikationsvorrichtung (1, Oa) über ein erstes Kommunikationsnetz (31, N1) gesendet (t_send, t_{α}, t_{β}) und von einem Gateway (2, 2_{α}, G) über ein zweites Kommunikationsnetz (32, N2) weitergeleitet werden, wobei der Netzserver (4α, NS_{α}) aufweist:
• einen Analysator (45α) empfangener Frames, wobei der Analysator (45α) von allen vom Gateway (2_{α}) kommenden Frames versorgt wird; und
• einen Generator (410_{α}) von Paaren (priv_k_{G}, pub_k_{G}) von Gateway-Schlüsseln, der einen öffentlichen Gateway-Schlüssel (pub_k_{G}) an eine Kommunikationsvorrichtung (1, O_{α}) und einen privaten Gateway-Schlüssel (priv_k_{G}) an mindestens ein Gateway (2) der Betreiberinfrastruktur (a) bei der Verbindung der Kommunikationsvorrichtung (1, O_{α}) mit einer den Netzserver (4_{α}, NS_{α}) aufweisenden Betreiberinfrastruktur (a) generiert und liefert.

## Claims

1. Method for operator identification of frames to be sent by a communication device (1, Oα) of an operator infrastructure (α) via a first communication network (31, N1), the method for operator identification (T_ID) comprising a first encryption (T_CRYPT), termed gateway encryption, by the communication device (1, Oα) of the operator infrastructure (α), of a frame (tu, ts) destined for a network server (4, 4α, 4β, NS, NSα, NSβ) with a gateway public key (pub_k_{G}) associated with the communication device (1, Oα) in the operator infrastructure (α), the gateway public key (pub_k_{G}) being paired with a gateway private key (priv_k_{G}) stored in at least one gateway (2, G) of the operator infrastructure (α), the gateway public key associated with the communication device having been generated during the attachment of the communication device to the operator infrastructure.

2. Method for operator identification according to the preceding claim, **characterized in that** the method for operator identification (T_ID) comprises generation (T_INT) of a digest (MICI) of the frame (tu, ts) destined for the network server (4, 4α, 4β, NS, NSα, NSβ) as a function of an integrity key (ki), the digest (MICI) and the integrity key (ki) being added to the frame (tu, ts, ti) destined for the network server (4, 4α, 4β, NS, NSα, NSβ) prior to the gateway encryption (T_CRYPT).

3. Method for transmission of frames by a communication device (1, Oα) of an operator infrastructure (α) via a first communication network (31, N1), the method for transmission of frames (T_TR) comprising a first encryption (T_CRYPT), termed gateway encryption, by the communication device (1, Oα) of the operator infrastructure (α), of a frame destined for a network server (4, 4α, 4β, NS, NSα, NSβ) with a gateway public key associated with the communication device (1, Oα) in the operator infrastructure (α), the gateway public key being paired with a gateway private key stored in at least one gateway (2, G) of the operator infrastructure (α), the gateway public key associated with the communication device having been generated during the attachment of the communication device to the operator infrastructure.

4. Method for transmission of frames according to the preceding claim, **characterized in that** the transmission method (T_TR) comprises, prior to the first encryption (T_CRYPT), a second encryption (T_SGN), termed server encryption, of a frame (tu) destined for a network server (4, 4α, 4β, NS, NSα, NSβ) with a server private key (priv_KO), the server private key (priv_KO) being paired with a server public key (pub_KO) stored in a network server (4, 4α, 4β, NS, NSα, NSβ) of the operator infrastructure (α).

5. Method for verification of membership in an operator infrastructure (α) of a destination server for frames (t_send, tα, 1β) received by a gateway (2, G) of the operator infrastructure (α) from a communication device, the verification method (T_APP) comprising a first decryption (T_DCRYPT) of the received frames (t*) by means of a gateway private key (priv_k_{G}) stored in the gateway (2, G, Gα, Gβ), termed gateway decryption, the gateway private key having been generated during the attachment of the communication device to an operator infrastructure, a success ([S]) of the gateway decryption of a frame indicating that the decrypted frame (t') belongs to the operator infrastructure (α, β).

6. Method for verification of membership according to the preceding claim, **characterized in that** the verification method (T_APP) comprises a comparison (CMP) of a digest (MICI') contained in the decrypted frame (t') with a digest (MICI') of a payload decrypted frame part (tu') generated by means of an integrity key (k'i) contained in the decrypted frame, a result of equality of the comparison ([=]) indicating the success ([S]) of the gateway decryption of the frame.

7. Method for filtering frames received by a gateway (2, G) of a network infrastructure from a communication device, the filtering method (T_FLT) comprising transmission (T_RLY) to a network server (4, 4α, 4β, NS, NSα, NSβ) of the network infrastructure of at least one frame (tu') received from a communication device (1, Oα) via a first communication network (31, N1) and decrypted by means of a gateway private key (priv_k_{G}) stored in the gateway (2, G) if the gateway decryption (T_DCRYPT) of the frame is successful ([S]), the gateway private key having been generated during the attachment of the communication device to an operator infrastructure.

8. Filtering method according to the preceding claim, **characterized in that** the filtering method (T_FLT) comprises blocking (STP) of at least one decrypted received frame (tu') if the gateway decryption (T_DCRYPT) of the frame is a failure ([E]).

9. Method for generating asymmetric gateway keys which is implemented during the attachment of a communication device (1, Oα) to an operator infrastructure (α), the method for generating gateway keys (K_GEN) comprising generation of a pair (pub_k_{G}, priv_k_{G}) of gateway keys and provision (K_PROV) of the generated pair (pub_k_{G}, priv_k_{G}) of gateway keys by transmitting (K_EM) the gateway public key (pub_k_{G}) of the generated pair to the communication device (1, Oα) and the gateway private key (priv_k_{G}) of the generated pair to at least one gateway (2, 2_{α1}...2_{αN}, G, G_{α1}... G_{αN}) of the operator infrastructure (α).

10. Program comprising program code instructions for the execution of the steps of the method for operator identification (T_ID) according to either one of Claims 1 and 2, and/or of the transmission method (T_TR) according to either one of Claims 3 and 4, or of the method for verification of membership (T_APP) according to either one of Claims 5 and 6, and/or of the filtering method according to either one of Claims 7 or 8, or of the method for generating keys according to the preceding claim when said program is executed by a processor.

11. Communication device of an operator infrastructure (α) able to transmit frames via a first communication network (31, N1), the communication device (1, Oα) comprising a first encrypter (142), termed gateway encrypter, the gateway encrypter (142) being able to encrypt at least one frame (ts) destined for a server (4, 4α, 4β, NS, NSα, NSβ) of the operator infrastructure (α, β) with a gateway public key (pub_k_{G}) associated with the communication device (1, Oα) in the operator infrastructure (α, β), the gateway public key (pub_k_{G}) being paired with a gateway private key (priv_k_{G}) stored in at least one gateway (2, 2α, G) of the operator infrastructure (α, β), the gateway public key associated with the communication device having been generated during the attachment of the communication device to the operator infrastructure.

12. Communication device according to the preceding claim, **characterized in that** the first communication network (31, N1) is a low-consumption wireless communication network.

13. Gateway of an operator infrastructure able to transmit frames received from a communication device (1, Oα) via a first communication network (31, N1) to a network server (4, 4α, 4β, NS, NSα, NSβ) of the operator infrastructure (α) via a second communication network (32, N2), the gateway (2, 2α, G) comprising a frame filter (24α) able to transmit a received frame decrypted by means of a gateway private key (priv_k_{G}) stored in the gateway (2, 2α, G) if the gateway decryption of the frame is successful, the gateway private key having been generated during the attachment of the communication device to an operator infrastructure.

14. Network server of an operator infrastructure (α, β) able to receive frames (t_send, tα, tβ) which are sent by a communication device (1, Oα) via a first communication network (31, N1) and relayed by a gateway (2, 2α, G) via a second communication network (32, N2), the network server (4α, NSα) comprising
• an analyser (45α) of received frames, the analyser (45α) being fed with all the frames originating from the gateway (2α), and
• a generator (410α) of pairs (pub_k_{G}, priv_k_{G}) of gateway keys generating and providing a gateway public key (pub_k_{G}) to a communication device (1, Oα) and a gateway private key (priv_k_{G}) to at least one gateway (2α) of the operator infrastructure (α) during the attachment of the communication device (1, Oα) to an operator infrastructure (α) comprising the network server (4α, NSα).
